# EUROPEAN PATENT SPECIFICATION

(11) **EP 2 474 178 B1**
(45) Date of publication and mention of the grant of the patent: **12.08.2015**
(21) Application number: 10785000.0
(22) Date of filing: 30.08.2010
(51) Int. Cl.: H04W 12/08, H04W 8/20, H04W 88/08, H04W 84/04

(54) **A METHOD FOR COMMUNICATING DATA BETWEEN A SECURE ELEMENT AND A NETWORK ACCESS POINT AND A CORRESPONDING SECURE ELEMENT**
Verfahren zum Übertragen von Daten zwischen einem sicheren Element und einem Netzzugangspunkt und entsprechendes sicheres Element
Procédé pour la communication de données entre un élément sécurité et un point d'accès au réseau et élément sécurisé correspondant

(30) Priority: 31.08.2009 EP 09305804
(43) Date of publication of application: 11.07.2012
(73) Proprietor: GEMALTO SA, 92190 Meudon (FR)
(72) Inventor: PAULIAC, Mireille, F-13400 Aubagne (FR)
(86) International application number: PCT/EP2010/062647
(87) International publication number: WO 2011/023819

(56) References cited:
- US-A- 5 913 175
- GSMA: "Femtocell Deployment Security Issues White Paper", 3GPP DRAFT; S3-081097 GSMA FCG SECURITY WHITE PAPER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sophia; 20080918, 18 September 2008 (2008-09-18), XP050334141,
- "Smart Cards; Secure channel between a UICC and an end-point terminal (Release 7)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V7.4.0, 1 June 2009 (2009-06-01), XP014044474,
- "3rd Generation Partnership Project; Technical Specification Group Service and System Aspects; Security of H(e)NB; (Release 8)", 3GPP STANDARD; 3GPP TR 33.820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 June 2009 (2009-06-01), pages 1-78, XP050376886,

## Description

### Field of the invention:

The invention relates, in a general manner, to a method for communicating data between a secure element and a network access point.

Moreover, the invention also relates to a secure element for communicating data with a network access point.

Within the present description, a secure element is a smart object that is intended to communicate with the outside world.

In particular, the secure element may cooperate with a network access point that is or has to be connected to a communication network.

The present invention is notably, but not exclusively, applicable to a communication network, like Internet, with which a Femtocell, as network access point, is or has to be coupled. Furthermore, a smart card or the like, as Hosting Party Module (or HPM), as secure element, is coupled or has to be coupled with the Femtocell.

### State of the art:

As known per se, when coupled with each other, an HPM and a Femtocell exchange notably data relating to their own identities, namely an HPM's identity and a Femtocell's identity.

Since the HPM's identity and the Femtocell's identity are both unique and specific to the entity that it identifies, it prevents each of the two entities from being substituted by another entity of the same type, for example for maintenance reasons.

The white paper "Femtocell Deployment: Security Issues White Paper", published in June 2008 by the GSM Association and the technical specification ETSI TS 102 484 v7.4.0 (June 2009) discuss the use of mechanisms for securely pairing a a secure token such as a UICC to a femtocell. The technical report 3GPP TR 33.820 v8.1.0 (June-2009) discloses the use of a secure module for securing a home base station. The base station registers with a server in the network the binding between its identity and the identity of the secure module.

There is a need to provide a solution that allows to be more flexible than the aforementioned known solution while remaining secure.

### Summary of the invention:

The invention proposes a solution for satisfying the just hereinabove specified need by providing a method for communicating data between a secure element and a network access point. The secure element, said first secure element, is coupled with a network access point. The network access point is comprised within a communication network.

According to the invention, at least one of the first secure element and the network access point sends, to the other of the network access point and the first secure element respectively, data relating to an identity of a communication link between the first secure element and the network access point.

The principle of the invention consists in that the first secure element and the network access point exchange data identifying a logical link that links the secure element and the network access point, so as to communicate.

Accordingly, the use of the data identifying a communication link between the first secure element and the network access point allows to liaise one of the two entities, namely either the first secure element or the network access point, as one interlocutor, with a representative of the other entity, as another interlocutor.

Thus, the invention solution allows, among others, a network access point, to exchange with a secure element that substitutes in the place of a previous secure element, as first secure element (that has already been coupled with the network access point), by using data relating to the identity of the communication link between the network access point and the first secure element.

Naturally, the invention solution allows, among others, a secure element, to exchange with a network access point that substitutes in the place of a previous network access point (that has already been coupled with the secure element), by using data relating to the identity of the communication link between the network access point and the secure element.

The invention solution is more flexible than the known solution that is described hereinabove. As a matter of fact, for instance, a secure element, that takes the place of a previous secure element, is able to use data relating to the identity of the communication link between the network access point and the previous secure element, so as to communicate with the network access point while being recognized as an identified interlocutor of the network access point.

The invention solution allows one of the entities, namely either a network access point or a secure element, to exchange with a representative of the other entity that represents the other entity, namely the first secure element or the network access point respectively, by using data relating to an identity of the communication link between the entity and the represented entity that have been previously coupled with each other.

Advantageously, the first secure element and the network access point exchange data relating to an identity of the network access point and/or data relating to an identity of the first secure element, so that data relating to the identity of the communication link between the network access point and the first secure element is associated with data relating to the identity of the network access point and/or data relating to the identity of the first secure element.

In other words, the data identifying the logical link between the first secure element and the network access point is thus paired with data relating to an identity of the network access point and/or data relating to an identity of the first secure element. The data identifying the logical link between the first secure element and the network access point and the data relating to an identity of the network access point and/or data relating to an identity of the first secure element is to be used for a communication between the two interlocutors, namely a secure element and the network access point.

Such an invention embodiment allows to pair data relating to an identity of at least one of the interlocutors, namely the network access point and/or the first secure element, and data relating to an identity of a communication link between the two interlocutors.

More exactly, the invention solution allows a network access point, to exchange with a secure element that replaces a previous secure element (that has already been coupled with one and the same network access point), by using the matching pair, namely data relating to an identity of the first secure element and data relating to an identity of the communication link between the network access point and the first secure element.

According to a further aspect, the invention is a secure element for communicating data with a network access point. The secure element, said first secure element, is able to be coupled with a network access point. The network access point is comprised within a communication network.

According to the invention, the first secure element comprises means for sending to the network access point data relating to an identity of a communication link between the first secure element and the network access point.

As secure element, it can be any electronic device comprising at least one microprocessor, as data processing means, at least one memory (or being connected to at least one memory), and at least one Input/Output communication interface(s). The secure element can be constituted by any electronic medium, as a Secure Removable Module (or SRM). For example, the secure element can be embodied within a smart card or a dongle of the Universal Serial Bus (or USB) type, a Secure Digital card (or SD card), a MultiMedia Card (or MMC) or a chip to be fixed to a host, as a network access point, preferably in a removable manner. The secure element may be any electronic medium that may have different form factors.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of one embodiment of a secure element coupled with a home base station, as network access point, to give an access to a communication network from a user terminal, the secure element being arranged so that another secure element is allowed to replace the coupled secure element, according to the invention; and
- Figure 2 represents an example of one message flow between notably a secure element to be replaced of figure 1, the network access point, a remote server connected to the communication network, and a replacing secure element.

### Detailed description:

Herein under is considered a case in which the invention method for communicating data between a secure element and a network access point is implemented by a Femtocell, as network access point, and a Subscriber Identity Module (or SIM) type smart card, as HPM, as secure element, coupled with the Femtocell.

Naturally, the herein below described embodiment is only for exemplifying purposes and is not considered to reduce the scope of the present invention.

For example, instead of being constituted by a SIM type smart card, the secure element can be constituted by a dongle (that does not need any specific reader within a network access point, as host computer), a USB smart card, and/or any other electronic medium that may have different form factors. According to still other examples, the secure element can also be a chip fixed, possibly in a removable manner, to the network access point, or mechanically attached to the network access point.

Likewise, instead of being constituted by a Femtocell, the network access point may be constituted by a picocell, a Home (e)Node B, a home base station, and/or a gateway.

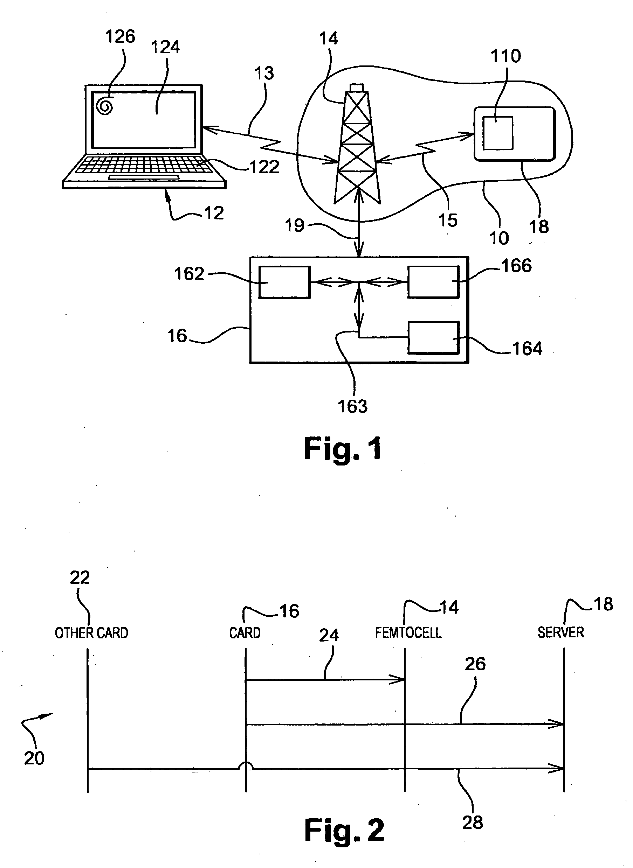

Figure 1 schematically shows a communication network 10, like Internet, to which a Personal Computer (or PC) 12, as user equipment, is connected through a Femtocell 14, as network access point.

The Femtocell 14 is coupled with a SIM type smart card 16, as secure element.

As user equipment, it can also be any handheld computer, like a mobile telephone, a Personal Digital Assistant (or PDA), a Voice over Internet Protocol handset, a netbook, and/or a mobile laptop. The user equipment can also include a set-top box, a desktop computer, a media player, a game console, and/or a portable television set (or TV).

A user accesses the PC 12 through a man machine interface, in order to be able to exploit, at least in part, one or several services (i.e. the execution of one or several applications) accessible through the communication network 10. The user interacts with the man machine interface and operates the PC 12.

The man machine interface may comprise a keypad 122 to enter typing information, a display screen 124 to view information, a loudspeaker to reproduce an audio signal and a microphone to capture an audio signal, and/or a pointer to point and/or select information, like a mouse.

The PC 12 is equipped with a modem and an antenna 126 to communicate data, via a bidirectional link 13, through the Femtocell 14, with the communication network 10.

The communicated data is transported, through the bidirectional link 13, over a short range radiofrequency link, like Bluetooth or Wifi, or via a wire.

The PC 12 is used by a user to communicate, for example, either with another user equipment connected to the communication network 10 or with an entity, like a remote entity 18 included within or connected to the communication network 10.

The PC user may thus benefit from one or several services offered by or through the communication network 10 via the Femtocell 14.

The Femtocell 14 may be located within a home of an individual or premises of an enterprise.

The Femtocell 14 can be portable and therefore movable.

The Femtocell 14 includes all the electronic components (not shown), like data processing means, volatile and non volatile memories, and several communication interfaces.

The Femtocell memories preferably store a key(s), termed a session key(s), to be used to communicate data in a confidential manner with the SIM type smart card 16. The session key(s) may include an integrity key used to verify that data has not been modified and/or a confidentiality key used to encrypt data to be exchanged between the Femtocell 14 and the SIM type smart card 16.

The Femtocell memories may store data relating to an identity of the Femtocell 14.

The Femtocell memories may store a private key and a corresponding public key.

As communication interfaces, the Femtocell 14 includes a communication interface with the PC 12 and another communication interface with the communication network 10.

The Femtocell 14 may be an intermediary communication element relaying information sent from either the PC 12 or the communication network 10 and intended to either the communication network 10 or the PC 12 respectively.

The Femtocell 14 is connected, through a bidirectional link 15, to the communication network 10, so as to exchange information with the communication network 10 through either a wire line or a wireless line, such as a radio-communication line.

The Femtocell 14, as a small cellular base station, when coupled with the PC 12 through a short range radiofrequency link, has a radio coverage that allows the PC 12 to access the communication network 10.

The Femtocell 14 is connected, on one side, to the PC 12, on another side, to the communication network 10, and on still another side, to the SIM type smart card 16, as a separate and dedicated secure element associated with the Femtocell 14.

For a sake of simplicity, the SIM type smart card 16 is termed hereinafter card 16.

The card 16 is coupled, through a bidirectional link 19, to the Femtocell 14 allowing the card 16 and the Femtocell 14 to exchange information.

A physical contact link constitutes the bidirectional link 19 between the card 16 and the Femtocell 14.

According to another embodiment, the card 16 and the Femtocell 14 are connected through a radiofrequency link, such as a short-range radiofrequency link, like a Bluetooth or Wifi link.

According to still another embodiment, the card 16 and the Femtocell 14 are connected through, on the one hand, a radiofrequency link, and on the other hand, a physical contact link. According to such an embodiment, for example, the card 16 receives data from the associated Femtocell 14 via the radiofrequency link and the card 16 sends data to the associated Femtocell 14 via the physical contact link. Naturally, the other implementation is also possible, namely the card 16 sends data to the associated Femtocell 14 via the radiofrequency link and the card 16 receives data from the associated Femtocell 14 via the physical contact link.

The card 16 is electrically coupled with its associated Femtocell 14 to cooperate with it.

The card 16 is either attached to or detachable from the Femtocell 14 with which the card 16 is associated.

The card 16 is, for example, mechanically connected either directly to the Femtocell 14 itself or to an antenna or any other physical element linked to the Femtocell14.

The card 16 receives data from the outside world, either from the Femtocell 14 or through the Femtocell 14.

Conversely, the card 16 sends data to the outside world, either to the Femtocell 14 or through the Femtocell 14.

The card 16 belongs to a user. The card user uses the card 16 for one or several services. The service may be provided from either the remote entity 18 or another entity connected to the communication network 10, as a service provider.

The card 16 is used preferably to configure the Femtocell 14 to operate. The card 16 incorporates at least one chip.

The chip includes at least one microprocessor 162, at least one memory 164, and at least one Input/Output (or I/O) interface 166 that communicates with the exterior of the chip.

The microprocessor 162 is linked, through an internal bidirectional data bus 163, to the memory 164 and the I/O interface 166.

The microprocessor 162 processes, controls and communicates internally data, through the internal bidirectional data bus 163, with all the different other electronic components incorporated within the chip.

The microprocessor 162 may read data from, write data into, and/or execute data stored within the memory 164. Furthermore, the microprocessor 162 controls access to data stored within the memory 164 and communicates data, through the I/O interface 166, with the outside world.

The microprocessor 162 executes the Operating System (or OS) and at least one application stored within the memory 164.

Preferably, the memory 164 stores a key(s), termed session key(s), to be used to communicate data in a confidential manner with the Femtocell 14.

It is to be noted that the session key(s) is(are) definitive and permanent symmetric key(s) that is(are) shared with the Femtocell 14 (i.e. also stored by the Femtocell 14).

The memory 164 may securely store data relating to the card 16 itself, like a private key and a corresponding public key. The memory 164 may also securely store data relating to the Femtocell 14, such as a particular set of access parameters and/or variables, to let operate the Femtocell 14.

The memory 164 preferably stores a root certificate provided by a certification authority, like a communication network operator or on its behalf, and an algorithm for verifying that a Femtocell certificate has been derived from the root certificate, in order to certify that its interlocutor, as the Femtocell 14, is a genuine Femtocell under a control of a trusted authority.

The memory 164 preferably stores data relating to the Femtocell 14 to which it is paired, such as data relating to the Femtocell identity.

The memory 164 may store the public key of the Femtocell 14, as data provided by the card manufacturer during its personalisation process, the Femtocell 14, and/or the remote server 18.

The memory 164 preferably stores data relating to a Uniform Resource Locator (or URL) address of the remote server 18.

According to an important feature of the invention, the memory 164 stores data relating to an identity of a communication link, as logical link, between the Femtocell 14 and the card 16.

For a sake of simplicity, the data relating to an identity of a communication link between the card 16 and the Femtocell 14 is termed hereinafter card link identity.

The card link identity may be stored in a specific file, such as an Elementary File for data relating to a link with an associated Femtocell.

The card link identity may have a data format that has a four byte length, like a Temprorary Mobile Subscriber Identity format.

According to a preferred invention embodiment, the card 16 is arranged to send to the Femtocell 14 the card link identity.

The card link identity is to be used, so as to tie the card 16 to the Femtocell 14.

As soon as the card 16 is physically coupled to the Femtocell 14, the Femtocell 14 exchanges data with the card 16 only when, beforehand, the card 16 identifies to the Femtocell 14 by sending it notably the card link identity. In other words, if the card link identity is not included within data submitted to the Femtocell 14, then the Femtocell 14 does not recognize an originator of the submitted data as the allowed card 16 and therefore forbids to communicate data to the concerned originator.

For instance, the card 16 is likely to send to the Femtocell 14 the card link identity, just after the card 16 has been physically coupled to the Femtocell 14 during a first communication session. To perform such a sending of the card link identity, the card 16 stores within its memories 164 and executes, thanks to its microprocessor 162, an application relating to a binding to a Femtocell.

The execution of such a binding application may be triggered once a secure channel has been previously established between the card 16 and the Femtocell 14, i.e. the card 16 and the Femtocell 14 share at least one common key to be used for exchanging data in a secure manner, namely an integrity key and/or a confidentiality key, used as session key(s).

The card link identity may be randomly generated by a communication network operator. The communication network operator may provide the card link identity to the card manufacturer, so as to configure the logical link between the card and the Femtocell.

The card 16 is thus loaded, during its manufacturing at a personalisation process, with the card link identity.

According to another embodiment, the card 16 has previously generated the card link identity by using a predetermined stored algorithm and/or some predefined stored data.

Preferably, each time the card link identity is to be exchanged, the card link identity is encrypted with an encryption key and an encryption algorithm stored by the sender and decrypted with corresponding decryption key and decryption algorithm stored by the receiver.

For example, the card 16 encrypts the card link identity with a session key shared with the Femtocell 14 previously provided to or generated by the card 16. Only the Femtocell 14 is able to decrypt the encrypted card link identity, since the Femtocell 14 has the session key that is symmetric.

For a sake of simplicity, data relating to an identity of the Femtocell 14 and data relating to an identity of the card is termed hereinafter Femtocell identity and card identity respectively.

Preferably, the memory 164 stores the card link identity associated with the Femtocell identity, to be used as data for identifying the card 16 as interlocutor of the Femtocell 14, so as to better define a link of the card 16 and the Femtocell 14.

Such an association or pairing of the card link identity and the card identity allows to characterize a relation of the card 16 with the outside world. The pairing of the card link identity and the card identity allows to identify the card and the link with the Femtocell 14.

The card link identity may be used to generate at least one key, such as an encryption key (or termed confidentiality key) and/or an integrity key. In such a case, the card 16 generates the key(s) based on the card link identity and sends the generated key(s) to the Femtocell 14, as a secret key(s) to be shared.

The card chip is preferably adapted to perform access procedures, such as an authentication of the associated Femtocell 14 and/or any external entity, like the remote entity 18, before communicating data with it.

The card 16 is able to communicate data, through the Femtocell 14 and one or several entities (not represented) like one or several home gateways, with the remote entity 18.

In a preferred manner, the card memory 164 stores a symmetric key also stored by the remote entity 18, to be used to protect in integrity and encrypt data to be sent to the remote entity 18. The symmetric key may be loaded into the card memory 164 during a manufacturing process at a personalisation phase or downloaded from the remote entity 18.

The remote entity 18 is included within an OTI (acronym for "Over The Internet") platform stored within a network element that is comprised within the communication network 10.

According to another embodiment, the remote entity 18 is included within an OTA (acronym for "Over The Air") platform stored within a network element, as such comprised within the communication network 10.

The remote entity 18 is a server. The remote server 18 manages through the card 16, as a remote network administrator, a database 110.

The remote server 18 accesses the database 110.

The remote server 18 includes a computer program. Such a computer program provides notably database services to other computer programs or computers among which there is the card 16 associated with the Femtocell 14. The remote server 18 may exchange data with the card 16 through the communication network 10.

The role of the remote server 18 is to remotely administrate user information in the card 16 and, through the card 16, the Femtocell 14 that relays transported information to the user equipment linked to the communication network 10.

The database 110 preferably includes data relating to at least one Femtocell of the communication network 10 that is bound to a card, as token. As data relating to at least one Femtocell of the communication network 10, the database 110 includes the card identity link preferably associated with the Femtocell identity and/or the card identity related to the pair constituted by the card 16 and the Femtocell 14.

The database 110 preferably records the shared symmetric key to be used to communicate with the card 16 and data relating to the card user.

The Femtocell 14 may be thus administrated from the remote server 18, in an interoperable, remote and secure way, by interposing the associated card 16 between the Femtocell 14 and the remote server 18. The card 16 may store data relating to the operation of the Femtocell 14, to prevent any attacker from reading and/or changing the features of the behaviour of the Femtocell 14 when communicating with the communication network 10 and/or with one or several user equipments.

Figure 2 depicts, according to a particular embodiment, notably messages 20 that are exchanged between the card 16, the Femtocell 14, the remote server 18 and another card 22, as another token.

The other card 22 is intended to replace the card 16, as the entity substituting for the card 16, as the unique interlocutor of the Femtocell 14, as token.

According to another embodiment, instead of another card 22, the entity substituting for the card 16 is another token type and can be constituted by any other electronic medium that may have different form factors while embedding at least one chip, such as a USB dongle.

It is assumed that, firstly, the card 16 has been physically coupled to the Femtocell 14, and, secondly, the card 16 and the Femtocell 14 have established a secure channel between them.

The secure channel consists in using one key(s), as session key(s), shared between the card 16 and the Femtocell 14, so as to exchange information in a secure manner.

According to a preferred embodiment, the session key(s) results from a handshake session (not represented) between the card 16 and the Femtocell 14. During the handshake session, the card 16 plays the role of a client while the Femtocell 14 plays the role of a server. The card 16 preferably authenticates the Femtocell 14. The Femtocell 14 may also authenticate the card 16.

For example, as handshake session, a Transport Layer Security (or TLS) session takes plase as soon as the card 16 is physically inserted within the Femtocell 14, the card 16 sends to the Femtocell 14 card random data by using the TLS protocol as defined by the Internet Engineering Task Force (or IETF) Request for Comments (or RFC) 4346.

Then, the Femtocell 14 sends back to the card 16 Femtocell random data and preferably a certificate relating to the Femtocell 14.

When provided with the Femtocell certificate, the card 16 verifies, thanks to the root certificate, and the verification algorithm that the Femtocell certificate has been derived from the root certificate.

The card 16 determines a pre-master key by using the card random data, the Femtocell random data and a predetermined algorithm.

Once the card 16 has generated the pre-master key, the card 16 sends the pre-master key to the Femtocell 14, preferably after having been encrypted with a public key related to the Femtocell 14 (previously provided to the card 16).

The Femtocell 14 computes or determines, by using the pre-master key and predefined algorithms like TLS_RSA_WITH_AES_128_CBC_SHA (acronyms for "Transport Layer Security, Rivest Shamir Adleman, Cipher Block Chaining and Secure Hash Algorithm"), a master key and at least one session key, namely an integrity key and/or a confidentiality key.

Likewise, the card 16 determines a master key and at least one session key, namely an integrity key and/or a confidentiality key (or termed encryption key), by using the pre-master key and the same predefined algorithms than the ones used by the Femtocell 14.

Once the handshake session has occurred, the session key(s), used as shared secret key(s), may not be replaced by other key(s) than the one(s) established further to the handshaking session. The shared key(s) is(are) to be used between the card 16 and the Femtocell 14 for any further information exchange within a secure channel.

During a session of binding the card 16 to the Femtocell 14, the card 16 sends to the Femtocell 14 a first message 24 with the card link identity preferably encrypted by using at least one session key. The Femtocell 14 has, in a preferred manner, previously requested to the card 16 the card link identity by sending to the card 16 a command (not represented) for retrieving the card link identity stored within the card 16.

If the Femtocell 14 receives the card link identity in an encrypted manner, then the Femtocell 14 uses corresponding decryption algorithm and decryption key to decrypt the encrypted card link identity.

The Femtocell 14 obtains the card link identity in clear (i.e. in a non-encrypted manner). The Femtocell 14 may save the card link identity in an encrypted manner.

The card 16 and the Femtocell 14 are thus paired.

The card 16 and the Femtocell 14 may generate a (secret) key based upon at least the card link identity and a predetermined shared algorithm, to be used for example as another session key.

According to an alternative, sole the card 16 generates a (secret) key based upon at least the card link identity and a predetermined algorithm. Then, the card 16 sends to the Femtocell 14, within the first message 24 or a separated message, the generated key that may be used between the card 16 and the Femtocell 14, for example as another session key.

The Femtocell 14 recognizes, as its authorized interlocutor, only an entity able to supply it with the card link identity.

Preferably, the card 16 sends to the Femtocell 14, within the first message 24 or a separated message, the card identity that is tied with the card link identity, preferably in an encrypted manner by using at least one session key.

To enhance the security between the card 16 and the Femtocell 14, the card 16 may also send, within the first message 24 or a separated message, to the Femtocell 14 other data, such as the Femtocell identity, preferably in an encrypted manner by using at least one session key, so as to be authorized to communicate with the Femtocell 14, as its paired card.

Then, the card 16 and the Femtocell 14 record and share same data relating to an identity of the link that binds them and possibly at least one of their own identities, namely the card identity and/or the Femtocell identity, so as to recognize each other, as one interlocutor of the two coupled parties.

The Femtocell 14 is adapted so as to allow its interlocutor, as the token to which the Femtocell 14 is coupled, to identify its interlocutor as the card 16 or a token substituting for the card 16.

Likewise, the card 16 may be adapted so as to allow its interlocutor, as the network access point to which the card 16 is coupled, to identify its interlocutor as the Femtocell 14 or a network access point substituting for the Femtocell 14.

More exactly, if an interlocutor sends to the Femtocell 14 (or the card 16), identifying data that is different from the card link identity, then the Femtocell 14 (or the card 16) forbids to process data originating from its interlocutor, as the card 16 (or as the Femtocell 14), and send data to its interlocutor, as the card 16. Otherwise, i.e. if an interlocutor sends to the Femtocell 14 (or the card 16), identifying data that is the card link identity, then the Femtocell 14 (or the card 16) is able to recognize its interlocutor as being either the card 16 (or the Femtocell 14) or a representative of the card 16 (or a representative of the Femtocell 14).

Moreover, preferably, if an interlocutor sends to the Femtocell 14 (or the card 16), authenticating data not protected by means of the shared session key (i.e. by decrypting with the shared session key), then the Femtocell 14 (or the card 16) forbids to process data originating from its interlocutor, as the card 16 (or as the Femtocell 14), and sends data to its interlocutor, as the card 16. Otherwise, i.e. if an interlocutor sends to the Femtocell 14 (or the card 16), authenticating data that are protected by means of the shared session key, then the Femtocell 14 (or the card 16) is able to authenticate its interlocutor as being either the card 16 (or the Femtocell 14) or a representative of the card 16 (or a representative of the Femtocell 14).

Once the binding session has been performed, a session of updating a network subscriber profile takes place after a communication session involving the card 16 and the remote server 18.

According to an interesting feature of the invention, at least one remote entity, like the remote server 18, is allowed by the card 16 to access the data stored within the card 16 and relating to the Femtocell 14 which the card 16 is bound to.

A communication session between the card 16 and the allowed remote server 18 may be open from either the card 16 or the remote server 18.

To initiate a remote access to the card 16, for a remote administration (from the OTI platform) of the Femtocell 14 through the card 16, the OTI platform may send to the card 16, through the communication network 10, and via the Femtocell 14, a predetermined message (not represented).

Once the remote server 18, as interlocutor of the card 16, that is identified thanks to the URL address stored within the card 16, is preferably authenticated by the card 16.

The card 16 may open a connection using a Transmission Control Protocol/Internet Protocol (or TCP/IP), a Bearer Independent Protocol (or BIP), or a Short Message Service (or SMS) channel with the remote server 18.

To open the connection, the card 16 sends, through the Femtocell 14, to the remote server 18, a second message 26 including the card link identity preferably in an encrypted manner e.g. by using the shared symmetric key relating to the remote server 18.

Once the remote server 18 has received from the card 16 the card link identity (preferably after having decrypted corresponding encrypted data e.g. by using the shared symmetric key relating to the remote server), the remote server 18 saves the card link identity within the database 110 or into an external memory, as data relating to a network subscriber profile, for the concerned Femtocell 14.

Preferably, the card 16 sends to the remote server 18, within the second message 26 or a separated message, the card identity that is tied with the card link identity and preferably encrypted, e.g. by using the shared symmetric key relating to the remote server 18.

The card 16 may send to the remote server 18, within the second message 26 or a separated message, the Femtocell identity that is tied with the card link identity and preferably encrypted, e.g. by using the shared symmetric key relating to the remote server 18.

Preferably, the card 16 sends to the remote server 18, within the second message 26 or a separated message, the session key(s) that is(are) shared with the Femtocell 14 and preferably encrypted, e.g. by using the shared symmetric key relating to the remote server 18.

The card 16 may send to the remote server 18, within the second message 26 or a separated message, the session key(s) that is(are) based upon the card link identity, and that is(are) shared with the Femtocell 14 and preferably encrypted, e.g. by using the shared symmetric key relating to the remote server 18.

The remote server 18 updates its database 110 by saving within the database 110, as the network subscriber profile relating to the Femtocell 14, the card link identity preferably accompanied with the Femtocell identity, the session key(s), and possibly the card identity, and/or the session key(s) based upon the card link identity.

The card 16 may be replaced, in a temporary or definitive manner, by a replacing token. The replacing token may be another card 22, another medium with a chip or a chip that is different from the card 16. The replacing token includes at least one chip that has to store the same specific data, namely at least the card link identity preferentially associated with the card identity, as well as the shared session key(s).

The communication network operator (or on its behalf) that administrates the remote server 18 informs the remote server 18 by entering an identity of a replacing card 22 into the database 110 within the network subscriber profile preferably accompanied with the shared session key(s) of the replaced card 16.

The replacing card 22 is preferably loaded, during its manufacturing process, at a personalisation phase, with, on one hand, data relating to the network subscriber profile of the concerned Femtocell 14, namely the card link identity preferentially accompanied with the card identity and/or the Femtocell identity, the session key(s) shared with the Femtocell 14, and, on the other hand, data relating to a symmetric key(s) shared with the remote server 18 to be used to protect in integrity the data to be exchanged and/or to encrypt the data to be exchanged in a confidential manner.

According to an alternative, the remote server 18 may download, through another message (not represented), into the replacing card 22 identified within the database 110, preferably in an encrypted manner, e.g. by using the shared symmetric key (that has been loaded, during its manufacturing process, at a personalisation phase), data relating to the concerned Femtocell 14, namely the information relating to the network subscriber profile of the concerned Femtocell 14, including the session key(s) shared with the Femtocell 14.

The replacing card 22 has to be coupled to the Femtocell 14 while keeping the card link identity, as logical link identifier, that has been used by the card 16 with the associated Femtocell 14, during a previous coupling of the Femtocell 14 with the card 16.

Likewise, the replacing card 22 has to be coupled to the Femtocell 14 while keeping the shared session key(s) that has(have) been used by the card 16 with the associated Femtocell 14, during a previous coupling of the Femtocell 14 with the card 16.

The replacing card 22 is then physically coupled to the Femtocell 14.

The replacing card 22 does not have to establish any new credentials for the secure channel with the Femtocell 14, since the replacing card 22 has got the shared session key(s) originating from the secure channel established between the replaced card 16 and the Femtocell 14.

The replacing card 22 uses thus the previous established secure channel by sending to the Femtocell 14, through a third message 28, the card link identity, that is preferably encrypted by using one shared session key(s) that has(have) been established by the replaced card 16.

Once the replacing card 22 has been identified by the Femtocell 14, since the Femtocell 14 has received the same expected specific data, namely at least the card link identity, then the Femtocell 14 authorizes the replacing card 22 to play the role of the card 16, as the replaced token, as its privileged interlocutor.

Thus, the Femtocell 14 does not perceive with the replacing card 22 any difference with the replaced card 16, since the same identification data originating from the replacing card 22 is used, except when the card identity is also used by the replacing card 22.

The example that has just been described is not intended to limit the scope of the concerned invention. Other examples may be given. Another example is in which a Femtocell is the interlocutor to be replaced. According to such other example, data relating to an identity relating to a communication link between a card and the Femtocell termed (Femtocell) link identity and preferably the card identity are to be used instead of the card link identity and preferably the Femtocell identity respectively, as identification data to be taken into account, as shared data.

## Claims

1. A method (20) for communicating data between a first secure element (16), the first secure element being coupled to a network access point (14), and the network access point, the network access point being comprised within a communication network (10),
wherein at least one of the first secure element and the network access point sends (24), to the other of the network access point and the first secure element respectively, data relating to an identity of a communication link, as logical link, between the first secure element and the network access point; and
**characterized in that** the first secure element sends (26) to a remote server (18) connected to the network access point data relating to at least one session key shared between the first secure element and the network access point.

2. Method according to claim 1, wherein the first secure element and the network access point also exchange data relating to an identity of the network access point and/or data relating to an identity of the first secure element, so that the data relating to the identity of the communication link between the network access point and the first secure element is associated with data relating to the identity of the network access point and/or data relating to the identity of the first secure element.

3. Method according to claim 1 or 2, wherein the first secure element sends to the remote server the data relating to the identity of the communication link between the first secure element and the network access point.

4. Method according to claim 3, wherein the remote server stores and sends (28) to a second secure element (22) the data relating to the identity of the communication link between the first secure element and the network access point.

5. Method according to claim 3 or 4, wherein the remote server stores and sends to a second secure element data relating to:
- an identity of the first secure element to which the network access point has been coupled;
- an identity of the network access point to which the first secure element has been coupled; and/or
- at least one key amongst a confidentiality key and an integrity key stored by the first secure element and the network access point.

6. Method according to any of claims 3 to 5, wherein the remote server stores data relating to an identity of a second secure element.

7. Method according any of claims 4 to 6, wherein the second secure element sends (210) to the network access point, the data relating to the identity of the communication link between the first secure element and the network access point.

8. A first secure element (16) for communicating data, the first secure element being able to be coupled to a network access point (14), the network access point being comprised within a communication network (10),
wherein the first secure element is able to:
- send (24) to the network access point data relating to an identity of a communication link, as logical link, between the first secure element and the network access point, a remote server being connected to the network access point;
the first secure element being **characterized in that** it is adapted to:
- send (26) to the remote server (18) data relating to at least one session key shared between the first secure element and the network access point.

9. Secure element according to claim 8, wherein the first secure element comprises means for sending to a remote server the data relating to the identity of a communication link between the first secure element and the network access point.

10. Secure element according to claim 8 or 9, wherein the first secure element comprises means for sending to the network access point data relating to an identity of the first secure element.

## Patentansprüche

1. Verfahren (20) zum Kommunizieren von Daten zwischen einem mit einem Netzwerkzugangspunkt (14) gekoppelten ersten Sicherheitselement (16) und dem Netzwerkzugangspunkt, wobei der Netzwerkzugangspunkt in einem Kommunikationsnetzwerk (10) umfasst wird,
wobei wenigstens einer des ersten Sicherheitselements und des Netzwerkzugangspunkts jeweils zu dem anderen Netzwerkzugangspunkt und dem ersten Sicherheitselement Daten bezüglich einer Identität eines Kommunikationslinks, als logischen Link, zwischen dem ersten Sicherheitselement und dem Netzwerkzugangspunkt sendet (24),
**dadurch gekennzeichnet, dass** das erste Sicherheitselement zu einem entfernten Server (18) Daten in Bezug auf wenigstens einen Sitzungsschlüssel sendet (26), wobei der Server mit dem Netzwerkzugangspunkt verbunden ist, wobei der Sitzungsschlüssel zwischen dem ersten Sicherheitselement und dem Netzwerkzugangspunkt geteilt wird.

2. Verfahren gemäß Anspruch 1, wobei das erste Sicherheitselement und der Netzwerkzugangspunkt ebenfalls Daten in Bezug auf eine Identität des Netzwerkzugangspunkts und / oder Daten in Bezug auf eine Identität des ersten Sicherheitselements derart austauschen, dass die Daten in Bezug auf die Identität des Kommunikationslinks zwischen dem Netzwerkzugangspunkt und dem ersten Sicherheitselement Daten in Bezug auf die Identität des Netzwerkzugangspunkts und / oder Daten in Bezug auf die Identität des ersten Sicherheitselements zugeordnet werden.

3. Verfahren gemäß Anspruch 1 oder 2, wobei das erste Sicherheitselement zum entfernten Server die Daten in Bezug auf die Identität des Kommunikationslinks zwischen dem ersten Sicherheitselement und dem Netzwerkzugangspunkt sendet.

4. Verfahren gemäß Anspruch 3, wobei der entfernte Server die Daten in Bezug auf die Identität des Kommunikationslinks zwischen dem ersten Sicherheitselement und dem Netzwerkzugangspunkt speichert und zu einem zweiten Sicherheitselement (22) sendet (28).

5. Verfahren gemäß Anspruch 3 oder 4, wobei der entfernte Server Daten speichert und zu einem zweiten Sicherheitselement sendet, die sich beziehen auf:
- eine Identität des ersten Sicherheitselements, mit dem der Netzwerkzugangspunkt gekoppelt wurde;
- eine Identität des Netzwerkzugangspunkts, mit dem das erste Sicherheitselement gekoppelt wurde und / oder
- wenigstens einen Schlüssel aus einem Vertraulichkeitsschlüssel und einem Integritätsschlüssel, die durch das erste Sicherheitselement und den Netzwerkzugangspunkt gespeichert wird.

6. Verfahren gemäß Anspruch 3 bis 5, wobei der entfernte Server Daten in Bezug auf eine Identität eines zweiten Sicherheitselements speichert.

7. Verfahren gemäß Anspruch 4 bis 6, wobei das zweite Sicherheitselement zum Netzwerkzugangspunkt die Daten in Bezug auf die Identität des Kommunikationslinks zwischen dem ersten Sicherheitselement und dem Netzwerkzugangspunkt sendet (210).

8. Ein erstes Sicherheitselement (16) zum Kommunizieren von Daten, wobei das erste Sicherheitselement in der Lage ist, an einen Netzwerkzugangspunkt (14) gekoppelt zu werden, wobei der Netzwerkzugangspunkt in einem Kommunikationsnetzwerk (10) umfasst wird, wobei das erste Sicherheitselement fähig ist, um:
- zum Netzwerkzugangspunkt Daten in Bezug auf eine Identität eines Kommunikationslinks, als logischen Link, zwischen dem ersten Sicherheitselement und dem Netzwerkzugangspunkt zu senden (24), wobei ein entfernter Server an den Netzwerkzugangspunkt angeschlossen ist,
wobei das erste Sicherheitselement **dadurch gekennzeichnet ist, dass** es angepasst ist, um
- zum entfernten Server (18) Daten in Bezug auf wenigstens einen Sitzungsschlüssel zu senden (26), der zwischen dem ersten Sicherheitselement und dem Netzwerkzugangspunkt geteilt wird.

9. Sicherheitselement gemäß Anspruch 8, wobei das erste Sicherheitselement Mittel zum Senden von Daten in Bezug auf die Identität eines Kommunikationslinks zwischen dem ersten Sicherheitselement und dem Netzwerkzugangspunkt zu einem entfernten Server umfasst.

10. Sicherheitselement zwischen Anspruch 8 oder 9, wobei das erste Sicherheitselement Mittel zum Senden von Daten in Bezug auf eine Identität des ersten Sicherheitselements zum Netzwerkzugangspunkt umfasst.

## Revendications

1. Procédé (20) pour communiquer des données entre un premier élément sécurisé (16), le premier élément sécurisé étant couplé à un point d'accès réseau (14), et le point d'accès réseau, le point d'accès réseau étant inclus au sein d'un réseau de communication, dans lequel au moins l'un parmi le premier élément sécurisé et le point d'accès réseau envoie (24) à l'autre parmi le point d'accès réseau et le premier élément sécurisé respectivement, des données relatives à une identité d'une liaison de communication, en tant que liaison logique, entre le premier élément sécurisé et le point d'accès réseau ; et
**caractérisé en ce que** le premier élément sécurisé envoie (26) à un serveur distant (18) connecté au point d'accès réseau, des données relatives à au moins une clé de session partagée par le premier élément sécurisé et le point d'accès réseau.

2. Procédé selon la revendication 1, dans lequel le premier élément sécurisé et le point d'accès réseau échangent également des données relatives à une identité du point d'accès réseau et/ou des données relatives à une identité du premier élément sécurisé, de sorte que les données relatives à l'identité de la liaison de communication entre le point d'accès réseau et le premier élément sécurisé sont associées aux données relatives à l'identité du point d'accès réseau et/ou aux données relatives à l'identité du premier élément sécurisé.

3. Procédé selon la revendication 1 ou 2, dans lequel le premier élément sécurisé envoie au serveur distant les données relatives à l'identité de la liaison de communication entre le premier élément sécurisé et le point d'accès réseau.

4. Procédé selon la revendication 3, dans lequel le serveur distant stocke et envoie (28) à un second élément sécurisé (22) les données relatives à l'identité de la liaison de communication entre le premier élément sécurisé et le point d'accès réseau.

5. Procédé selon la revendication 3 ou 4, dans lequel le serveur distant stocke et envoie à un second élément sécurisé des données relatives à :
- une identité du premier élément sécurisé auquel le point d'accès réseau a été couplé ;
- une identité du point d'accès réseau auquel le premier élément sécurisé a été couplé ; et/ou
- au moins une clé parmi une clé de confidentialité et une clé d'intégrité stockée par le premier élément sécurisé et le point d'accès réseau.

6. Procédé selon l'une quelconque des revendications 3 à 5, dans lequel le serveur distant stocke des données relatives à une identité d'un second élément sécurisé.

7. Procédé selon l'une quelconque des revendications 4 à 6, dans lequel le second élément sécurisé envoie (210) au point d'accès réseau les données relatives à l'identité de la liaison de communication entre le premier élément sécurisé et le point d'accès réseau.

8. Premier élément sécurisé (16) pour communiquer des données, le premier élément sécurisé étant capable d'être couplé à un point d'accès réseau (14), le point d'accès réseau étant inclus au sein d'un réseau de communication (10), dans lequel le premier élément sécurisé est capable d'envoyer (24) au point d'accès réseau des données relatives à une identité d'une liaison de communication, en tant que liaison logique, entre le premier élément sécurisé et le point d'accès réseau, à un serveur distant qui est connecté au point d'accès réseau ;
le premier élément sécurisé **étant caractérisé en ce qu**'il est adapté pour :
- envoyer (26) au serveur distant (18) des données relatives à au moins une clé de session partagée par le premier élément sécurisé et le point d'accès réseau.

9. Elément sécurisé selon la revendication 8, dans lequel le premier élément sécurisé comprend des moyens pour envoyer à un serveur distant les données relatives à l'identité d'une liaison de communication entre le premier élément sécurisé et le point d'accès réseau.

10. Elément sécurisé selon la revendication 8 ou 9, dans lequel le premier élément sécurisé comprend des moyens pour envoyer au point d'accès réseau des données relatives à une identité du premier élément sécurisé.
